# EUROPEAN PATENT APPLICATION

(11) **EP 4 687 360 A1**
(43) Date of publication of application: **04.02.2026**
(21) Application number: 24191794.7
(22) Date of filing: 30.07.2024
(51) Int. Cl.: H04W 24/02, H04L 41/16

(54) **METHOD FOR LARGE LANGUAGE MODEL USAGE, SYSTEM OR MOBILE COMMUNICATION NETWORK, UNIFIED VECTOR REPOSITORY ENTITY OR FUNCTIONALITY, PROGRAM AND COMPUTER-READABLE MEDIUM**

(71) Applicant: Deutsche Telekom AG, 53113 Bonn (DE)
(72) Inventor: BLICKER, Stephan, 53343 Wachtberg (DE)
(74) Representative: Schwöbel, Thilo K.

(57) **Abstract**

The invention relates to a method for large language model usage, especially for realizing network service level improvement and/or for enhancing network efficiency within or related to a mobile communication network, wherein the mobile communication network comprises a radio access network and a core network, wherein the mobile communication network and/or the core network comprises a plurality of network functions or services, wherein the plurality of network functions or services at least comprises a telco application agent and a unified vector repository entity or functionality, wherein, in order to realize large language model usage, especially associated with network service level improvement and/or an increase of network efficiency within or related to the mobile communication network, the telco application agent exchanges messages with the unified vector repository entity or functionality, wherein the method comprises the following steps:
-- in a first step, the unified vector repository entity or functionality receives a unified vector repository request message,
-- in a second step, the unified vector repository entity or functionality transmits a unified vector repository response message.

## Description

### BACKGROUND

The present invention relates a method for large language model usage, especially for realizing network service level improvement and/or for enhancing network efficiency within or related to a mobile communication network.

Additionally, the present invention relates to a system or to a mobile communication network for large language model usage, especially for realizing network service level improvement and/or for enhancing network efficiency within or related to a mobile communication network.

Furthermore, the present invention relates to a unified vector repository entity or functionality for large language model usage, especially for realizing network service level improvement and/or for enhancing network efficiency within or related to a mobile communication network.

Furthermore, the present invention relates to a program and to a computer-readable medium for large language model usage according to the inventive method.

Large language models are gaining momentum and are able to be used for ever more applications, also in the domain of telecommunications network or mobile communication networks; in the context of the present invention, such applications are also called telco applications.

However, presently, large language models are typically focused on being used, in telco applications, rather for general use cases or applications that, typically, do not take into account subscriber-related data or subscriber behaviour.

### SUMMARY

An object of the present invention is to provide a technically simple, effective and cost-effective solution for realizing large language model usage, especially for realizing network service level improvement and/or for enhancing network efficiency within or related to a mobile communication network, especially in view of taking into account subscriber-related data and/or subscriber behaviour in an efficient manner. A further object of the present invention is to provide a corresponding system or mobile communication network, a corresponding unified vector repository entity or functionality, and a corresponding program and computer-readable medium.

The object of the present invention is achieved by a method for large language model usage, especially for realizing network service level improvement and/or for enhancing network efficiency within or related to a mobile communication network, wherein the mobile communication network comprises a radio access network and a core network, wherein the mobile communication network and/or the core network comprises a plurality of network functions or services, wherein the plurality of network functions or services at least comprises a telco application agent and a unified vector repository entity or functionality,
wherein, in order to realize large language model usage, especially associated with network service level improvement and/or an increase of network efficiency within or related to the mobile communication network, the telco application agent exchanges messages with the unified vector repository entity or functionality, wherein the method comprises the following steps:
-- in a first step, the unified vector repository entity or functionality receives a unified vector repository request message,
-- in a second step, the unified vector repository entity or functionality transmits a unified vector repository response message.

According to the present invention, it is advantageously possible to use the unified vector repository entity or functionality in order to use subscriber specific and/or behavioural information - especially by means of embedding such subscriber specific and/or behavioural information into queries - to be directed to large language models (LLM) in order to get subscriber behaviour-specific decisions and results.
Especially according to the present invention, it is advantageously possible to use the unified vector repository entity or functionality (or unified vector store) as part of the unified data management/network data layer (UDM/NDL) of the 5G core network of the mobile communication network.
It is thereby advantageously possible to apply an intelligent use of large language models for telecommunications applications (telco large language model usage), especially under consideration of subscriber specific embeddings, i.e. information or data related to (individual) subscribers and/or to their behaviour.

Especially, it is advantageously possible, according to the present invention, to realize and conduct protocol related queries of network functions or network function agents, especially with the (large language model) responses of such queries considering (or comprising information or data regarding) the behaviour of subscribers from network perspective, by means of using the appropriate embedding model (of such subscriber data or subscriber behavioral data).
Furthermore, it is advantageously possible, according to the present invention to use the unified vector repository entity or functionality and large language models also for chat bot queries, taking into account that the unified vector repository entity or functionality can be utilised not only in the core network domain but also in other domains for subscriber-related retrieval of corresponding (subscriber-related or subscriber data-related and/or behavioral data-related) embedded information.
Moreover, it is advantageously possible, according to the present invention, to provide third party utilisation of subscriber profile embeddings (or subscriber behavioural data), e.g. for third party large language models, e.g. of third party applications (for example by implementing a retrieval via the (or a) network exposure function of the mobile communication network).

It is conventionally known that, for natural language processing (NLP) applications, many tools and software components are available.

It is furthermore known that telco applications utilize prompting as semantic communication technology for different purposes, not only human centric (like chat bots) but also protocol centric - like telco protocol-based network functions. That means telco application agents can be e.g. bots, but also network functions. Telco chain handlers may treat the request of the applications (or telco application agents).

According to the present invention, the unified vector repository entity or functionality is used as a new subscriber vector store which contains subscriber-specific embeddings which are developed in (or available from) the telco operations and maintenance domain (i.e. the operations and maintenance, OAM, part of the mobile communication network).
According to the present invention, such subscriber-specific embeddings are especially determined (or developed or obtained) by means of a telco-specific subscriber profile embedding model (with the help of subscriber data from all relevant telco domains). Such embeddings (or such an embedding model) are (is) stored in the unified vector repository entity or functionality. Especially according to the present invention, the telco chain handler entity or functionality utilizes the embeddings in order to augment the query for the large language model result generation; hence, this is typically done in the telco chain handler software.

Especially according to the present invention, protocols and input queries are condensed and re-formatted via templates and rejected if the templates do not match with queries. These templates are especially standardized templates. Hence, according to the present invention, this provides the possibility that subscriber-specific behavioural information is able to be embedded into the large language model query in order to get subscriber behaviour-specific decisions and results.

Hence, according to the present invention, a method for large language model usage is provides that especially provides the possibility to realize network service level improvement and/or to enhance network efficiency within or related to the mobile communication network. As is conventionally the case, the mobile communication network comprises a radio access network and a core network, and the mobile communication network and/or the core network comprises a plurality of network functions or services. According to the present invention, the plurality of network functions or services at least comprises a telco application agent and a unified vector repository entity or functionality. In order to realize the large language model usage according to the present invention, and especially in view of obtaining network service level improvement and/or an increase of network efficiency within or related to the mobile communication network, the telco application agent exchanges messages with the unified vector repository entity or functionality, wherein the method comprises the following steps:
-- in a first step, the unified vector repository entity or functionality receives a unified vector repository request message,
-- in a second step, the unified vector repository entity or functionality transmits a unified vector repository response message.

This advantageously provides the possibility to provide the new unified vector repository entity or functionality in the form of a subscriber vector store which contains subscriber specific embeddings which are especially developed in the telco operations and maintenance domain with a telco-specific subscriber profile embedding model (i.e. especially with the help of subscriber data from all relevant telco domains such as subscriber (or user equipment) domain, radio access network domain, core network domain and application domain). The embeddings are stored in the new unified vector repository entity or functionality, and especially the telco chain handler utilizes the embeddings in order to augment the query for the large language model result generation.

According to the present invention, it is furthermore advantageously possible and preferred that the mobile communication network is connected to or able to access or comprises, especially as part of the plurality of network functions or services, a telco chain handler entity or functionality, wherein the telco chain handler entity or functionality comprises, or is connected to or able to access, at least one large language model entity or functionality.

It is thereby advantageously possible to realize and implement the inventive method in a comparatively simple and efficient manner.

Furthermore, it is advantageously possible and preferred according to the present invention that, especially as part of the telco chain handler entity or functionality, the at least one large language model entity or functionality receives query information, wherein the query information comprises embedding information, especially from the unified vector repository response message
wherein especially the embedding information comprises subscriber-specific data or information, especially subscriber-specific behavioural data or information.

It is thereby advantageously possible to realize and implement the inventive method in a comparatively simple and efficient manner.

According to the present invention, it is furthermore advantageously possible and preferred that the mobile communication network comprises, as part of the plurality of network functions or services, a network exposure function, wherein
-- the unified vector repository entity or functionality receives the unified vector repository request message from the network exposure function as a result of the telco application agent transmitting, to the network exposure function, a telco application request message corresponding to the unified vector repository request message and/or
-- the unified vector repository entity or functionality transmits the unified vector repository response message to the network exposure function, resulting in the telco application agent receiving, from the network exposure function, a telco application response corresponding to the unified vector repository response message.

It is thereby advantageously possible to realize and implement the inventive method in a comparatively simple and efficient manner.

Furthermore, it is advantageously possible and preferred according to the present invention that the mobile communication network comprises, as part of the plurality of network functions or services, a telco chain handler entity or functionality, wherein
-- the unified vector repository entity or functionality receives the unified vector repository request message from the telco chain handler entity or functionality as a result of the telco application agent and/or the network exposure function transmitting, to the telco chain handler entity entity or functionality, the telco application request message corresponding to the unified vector repository request message and/or
-- the unified vector repository entity or functionality transmits the unified vector repository response message to the telco chain handler entity or functionality, resulting in the telco application agent receiving, from the telco chain handler entity or functionality and/or from network exposure function, the telco application response corresponding to the unified vector repository response message.

It is thereby advantageously possible to efficiently realize and implement the inventive method in a comparatively simple and flexible manner.

Furthermore, it is advantageously possible and preferred according to the present invention that the unified vector repository entity or functionality receives embedding information, especially from an operations and maintenance entity or functionality,
wherein especially the operations and maintenance entity or functionality uses at least one out of the following:
   -- user equipment data,
   -- radio access network data,
   -- core network data and/or
   -- application data
in order to provide the embedding information to the unified vector repository entity or functionality and especially as part of the unified vector repository response message.

It is thereby advantageously possible to realize and implement the inventive method in a comparatively simple and efficient manner.

Furthermore, it is advantageously possible and preferred according to the present invention that the telco application request message and/or the unified vector repository request message comprises, or corresponds to, at least one request template, wherein the request template especially corresponds to one or a plurality of standardized request templates, and/or wherein the telco application response message and/or the unified vector repository response message comprises, or corresponds to, at least one response template, wherein the response template especially corresponds to one or a plurality of standardized response templates.

It is thereby advantageously possible to realize and implement the inventive method in a comparatively simple and efficient manner.

Furthermore, the present invention relates to a system or to a mobile communication network for large language model usage, especially for realizing network service level improvement and/or for enhancing network efficiency within or related to a mobile communication network, wherein the mobile communication network comprises a radio access network and a core network, wherein the mobile communication network and/or the core network comprises a plurality of network functions or services, wherein the plurality of network functions or services at least comprises a telco application agent and a unified vector repository entity or functionality, wherein in order to realize large language model usage, especially associated with network service level improvement and/or an increase of network efficiency within or related to the mobile communication network, the telco application agent exchanges messages with the unified vector repository entity or functionality, wherein the system or mobile communication network is configured such that:
-- the unified vector repository entity or functionality receives a unified vector repository request message,
-- the unified vector repository entity or functionality transmits a unified vector repository response message.

Furthermore, the present invention relates to a unified vector repository entity or functionality for large language model usage, especially for realizing network service level improvement and/or for enhancing network efficiency within or related to a mobile communication network, as part of a system or mobile communication network according to claim 8,
wherein especially the mobile communication network comprises a radio access network and a core network, wherein the mobile communication network and/or the core network comprises a plurality of network functions or services, wherein the plurality of network functions or services at least comprises a telco application agent and a unified vector repository entity or functionality,
wherein in order to realize large language model usage, especially associated with network service level improvement and/or an increase of network efficiency within or related to the mobile communication network, the telco application agent exchanges messages with the unified vector repository entity or functionality, wherein the unified vector repository entity or functionality is configured such that:
   -- the unified vector repository entity or functionality receives a unified vector repository request message,
   -- the unified vector repository entity or functionality transmits a unified vector repository response message.

Additionally, the present invention relates to a program comprising a computer readable program code which, when executed on a computer and/or on a network node or network nodes of a mobile communication network, especially realizing a telco application agent and/or realizing a unified vector repository entity or functionality and/or realizing a telco chain handler entity or functionality, or in part on a network node or network nodes of a mobile communication network, especially realizing a telco application agent and/or realizing a unified vector repository entity or functionality and/or realizing a telco chain handler entity or functionality, causes the computer and/or the network node or network nodes of the mobile communication network to perform the inventive method.

Additionally, the present invention relates to a computer-readable medium comprising instructions which when executed on a computer and/or on a network node or network nodes of a mobile communication network, especially realizing a telco application agent and/or realizing a unified vector repository entity or functionality and/or realizing a telco chain handler entity or functionality, or in part on a network node or network nodes of a mobile communication network, especially realizing a telco application agent and/or realizing a unified vector repository entity or functionality and/or realizing a telco chain handler entity or functionality, causes the computer and/or the network node or network nodes of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a mobile communication network comprising an access network, a core network and a user equipment, wherein the core network typically comprises a number of network functions or services, inter alia a telco application agent, a telco chain handler entity or functionality, a unified vector repository entity or functionality, an operations and maintenance entity or functionality and a network exposure function.
Figure 2 schematically illustrates a communication diagram of an exemplary embodiment according to the present invention between a telco application agent, a telco chain handler entity or functionality, and a unified vector repository entity or functionality.
Figure 3 schematically illustrates an exemplary embodiment for large language model usage in a mobile communication network, especially for realizing network service level improvement and/or for enhancing network efficiency.
Figure 4 schematically illustrates an exemplary embodiment showing how the unified vector repository entity or functionality is able to be integrated in the architecture of the mobile communication network.
Figure 5 schematically illustrates an example of how data are able to be provided to the unified vector repository entity or functionality.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

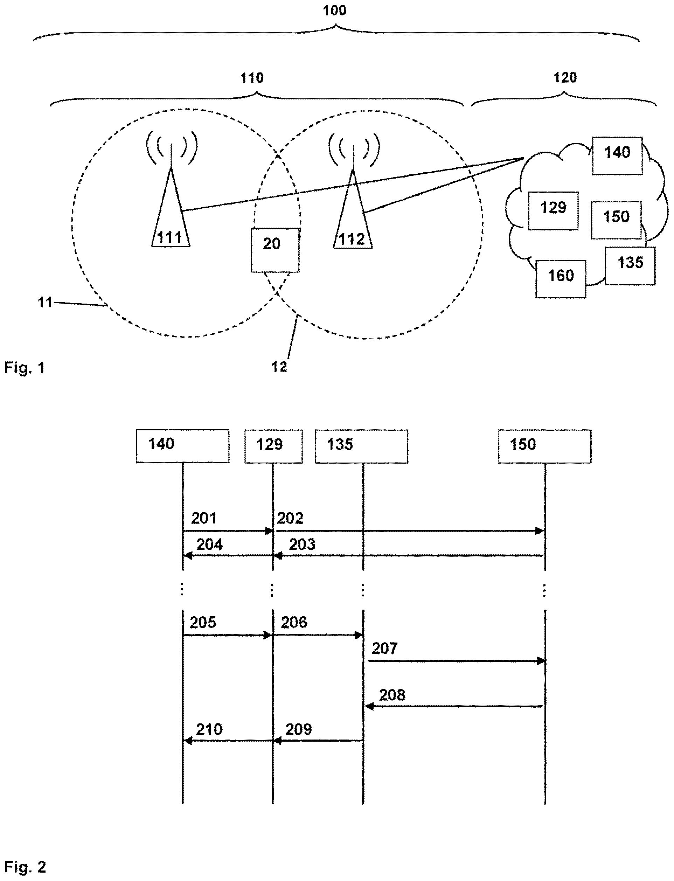

In Figure 1 a mobile communication network 100 comprising an access network 110, a core network 120 and a user equipment 20 is schematically illustrated.

The core network 120 typically comprises a number of network functions or services. Especially, Figure 1 schematically and exemplarily shows the core network 120 as comprising, inter alia, a telco application agent 140, a telco chain handler entity or functionality 135, a unified vector repository entity or functionality 150, an operations and maintenance entity or functionality 160 and a network exposure function 129.

According to the present invention, the mobile communication network 100 (and especially the core network 120 thereof) is furthermore connected to or able to access or comprises, especially as part of the plurality of network functions or services, at least one large language model entity or functionality (however, this is not represented in Figure 1).

The access network 110 comprises a plurality of radio cells 11, 12. In the exemplary situation or scenario shown in Figure 1, a first base station entity 111 generates (or, is associated with, or spans) the first radio cell 11, and a second base station entity 112 generates (or, is associated with or spans) the second radio cell 12. In the exemplary situation shown in Figure 1, the user equipment 20 is connected to the mobile communication network 100 via a radio interface to the first base station entity 111 and/or to the second base station entity 112. The user equipment 20 is typically, but not necessarily, mobile i.e. able to move with respect to the (typically, but not necessarily, static, i.e. stationary) radio cells 11, 12 or corresponding base station entities 111, 112 of the access network 110.

In order to realize, according to the present invention, an intelligent use of large language models for telecommunications applications (telco large language model usage), especially under consideration of subscriber-specific embeddings, i.e. information or data related to (individual) subscribers and/or to their behaviour, the unified vector repository entity or functionality 150 is used to provide subscriber-specific and/or behavioural information, especially by means of embedding such subscriber specific and/or behavioural information into queries - to be directed to large language models (LLM) in order to get subscriber behaviour-specific decisions and results. Especially according to the present invention, it is advantageously possible to use the unified vector repository entity or functionality (or unified vector store) 150 as part of the unified data management/network data layer (UDM/NDL) of the 5G core network of the mobile communication network. Furthermore especially, either alternatively to using the unified vector repository entity or functionality 150 as part of the unified data management/network data layer or cumulatively thereto, the unified vector repository entity or functionality 150 receives the embedding information from the operations and maintenance entity or functionality 160.

Thus, it is thereby advantageously possible, according to the present invention, to apply an intelligent use of large language models for telecommunications applications, especially by means of conducting protocol related queries of network functions or network function agents, and in view of large language model queries considering subscriber data or information and especially subscriber behaviour-related data or information.

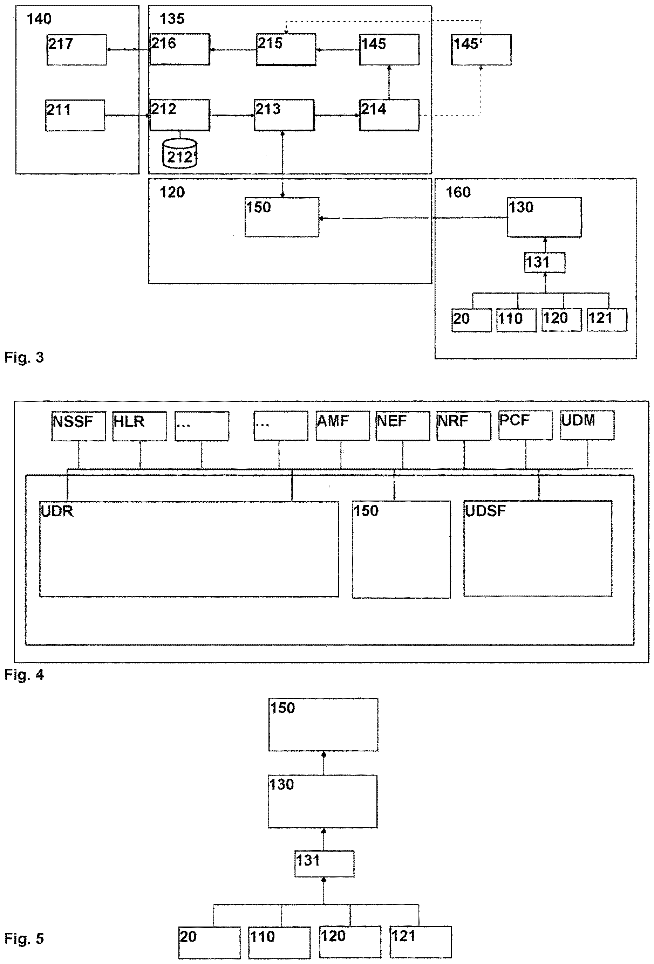

In Figure 2, a communication diagram (or sequence diagram) of an exemplary embodiment according to the present invention is schematically represented. The communication diagram of Figure 2 shows the communication - according to a first embodiment of the present invention without involving the telco chain handler entity or functionality 135; upper part of Figure 2 - between the telco application agent 140 and the unified vector repository entity or functionality 150 and the communication - according to a second embodiment of the present invention with an involvement of the telco chain handler entity or functionality 135; lower part of Figure 2 - between the telco application agent 140, the telco chain handler entity or functionality 135, and the unified vector repository entity or functionality 150. According to both examples or embodiments shown, the telco application agent 140 communicates with the network exposure function 129.
Hence, the telco sequence diagram of Figure 2 highlights the request response mechanisms according to the present invention; Third party application agents may utilize own large language models and only need telco subscriber embeddings vectors (cf. Figure 5). Another option is that third-party application agents utilize embeddings and telco a large language model for getting results to a specific query; also internal telco application agents may query the telco chain handler entity or functionality 135. The telco chain handler entity or functionality 135 may serve several different large language models in order to handle the query properly (cf. Figure 3).

According to the first embodiment shown in Figure 2 (upper part of that Figure), in a first processing step 201, the telco application agent 140 transmits, to the network exposure function 129, a telco application request message, and in a second processing step 202, the unified vector repository entity or functionality 150 receives, from the network exposure function 129, the unified vector repository request message (as a result of the telco application agent 140 transmitting the telco application request message of the first processing step 201). Furthermore, in a third processing step 203, the unified vector repository entity or functionality 150 transmits the unified vector repository response message to the network exposure function 129, and in a fourth processing step 204, the network exposure function 129 transmits, and the telco application agent 140 receives, a telco application response message (as a result of the unified vector repository entity or functionality 150 transmitting the unified vector repository response message in the third processing step 203). According to the present invention, the unified vector repository request message (transmitted by the network exposure function 129 as a result of the telco application agent 140 transmitting the telco application request message) is also called a "Nuvr request" (message), and the unified vector repository response message (ultimately received by the telco application agent 140, from the network exposure function 129, as the telco application response message) is also called a "Nuvr response" (message).

According to the second embodiment shown in Figure 2 (lower part of that Figure), in a fifth processing step 205, the telco application agent 140 transmits, to the network exposure function 129, (and the network exposure function 129 transmits, in a sixth processing step 206, to the telco chain handler entity or functionality 135) the telco application request message, and in a seventh processing step 207, the unified vector repository entity or functionality 150 receives, from the telco chain handler entity or functionality 135, the unified vector repository request message (as a result of the telco application agent 140 transmitting the telco application request message of the fifth processing step 205). Furthermore, in an eighth processing step 208, the unified vector repository entity or functionality 150 transmits the unified vector repository response message to the telco chain handler entity or functionality 135, and in a ninth processing step 209, the telco chain handler entity or functionality 135 transmits, (and the network exposure function 129 transmits, in a tenth processing step 210, to the telco application agent 140) the telco application response message (as a result of the unified vector repository entity or functionality 150 transmitting the unified vector repository response message in the eighth processing step 208). According to the present invention, the unified vector repository request message (transmitted by the telco chain handler entity or functionality 135) as a result of the telco application agent 140 (and the network exposure function 129) transmitting the telco application request message) is also called "Nuvr request" (message), and the unified vector repository response message (ultimately received by the telco application agent 140 (from the telco chain handler entity or functionality 140 and the network exposure function 129) as the telco application response message) is also called "Nuvr response" (message).
However, especially according to the second embodiment shown in Figure 2 (lower part of the Figure), the involvement of the network exposure function 129 is optional according to the present invention.

In Figure 3, an exemplary embodiment for large language model usage in a mobile communication network 100 is schematically illustrated, especially for realizing network service level improvement and/or for enhancing network efficiency. According to the present invention, it is advantageously possible that a telco application request (message) 211 is transmitted to the telco chain handler entity or functionality 135 as a query 212 (wherein the query 212 might be informed and/or modified and/or (at least in part) obtained by means of history data 212'). As part of the telco chain handler entity or functionality 135, the original query 212 is especially normalized by means of a query normalization process 213 or query normalization stage 213. Especially, according to the present invention, the query normalization process 213 involves the use of one or a plurality of templates, or template information. Especially according to the present invention, the query normalization process 213 involves the unified vector repository entity or functionality 150 (especially being part of the core network of the mobile communication network 100), wherein the unified vector repository entity or functionality 150 corresponds to the subscriber vector store which contains subscriber specific embeddings which are developed in the operations and maintenance domain 160 (or operations and maintenance entity or functionality 160) of the mobile communication network 100 with a telco specific subscriber profile embedding model 130 (established with the help of subscriber data obtained - after preprocessing 131 - from all relevant telco domains such as subscriber (or user equipment) domain 20, the radio access network domain 110, the core network domain 120 and the application domain 121). The embeddings are stored in the unified vector repository entity or functionality 150. The telco chain handler entity or functionality 135 utilizes the embeddings in order to augment the query 212 (or normalized query 212) for the large language model result generation; this is represented, in Figure 3, by means of reference sign 214, corresponding to a result such an embedding process that is done in the software of the telco chain handler entity or functionality 135. Such a modified query (i.e. resulting from the normalization process 213 and the embedding 214) is provided to a large language model - either a large language model 145 internal to the mobile communication network 100, or a large language model 145' external to the mobile communication network 100 (e.g. a third-party large language model 145') - whose result 215 is provided, after a response generation step 216 (especially using at least one (result) template) as the telco application response (message) 217 to the telco application agent 140.
Hence, the telco chain handler entity or functionality 135 treat the telco application requests 211 of the applications; protocols and input queries may be condensed and re-formatted via templates and rejected if the templates do not match with queries; especially templates are standardized and subscriber-specific behavioural information is embedded - using the unified vector repository entity or functionality 150 that especially stores such embeddings - into the query submitted to the large language model in order to get subscriber behaviour-specific decisions and results.

In Figure 4, an exemplary embodiment is schematically represented, showing how the unified vector repository entity or functionality 150 is able to be integrated in the architecture of the mobile communication network 100. In a conventional mobile communication network 100 (as specified by 3GPP), a 3GPP unified data management (UDM) system (or unified data management entity or functionality) is a central component in the architecture of such a 5G network. The unified data management UDM is especially part of the service-based architecture SBA in 5G and manages subscriber data and handles various network functions related to subscriber identity and authentication. Key functions of 3GPP 5G UDM are:
-- subscriber data management: unified data management UDM stores and manages subscriber information, such as subscriber profiles, subscription data, and service settings. It ensures that the network has up-to-date information about each subscriber.
-- authentication and authorization: unified data management UDM is responsible for authenticating subscribers when they access the network. It works with other network functions to ensure that only authorized subscribers can use network resources.
-- support for mobility: unified data management UDM helps manage subscriber mobility by storing and updating the subscriber's location information. This allows the network to route traffic to the correct location as the subscriber moves.
-- session management: UDM supports session management functions by maintaining session context information. This enables the network to manage active sessions and ensure seamless connectivity for subscribers.
-- policy control integration: unified data management UDM interacts with the policy control function (PCF) to enforce network policies. This includes handling quality of service (QoS) parameters and ensuring that network resources are allocated according to the subscriber's plan and current network conditions.
-- data exposure: unified data management UDM provides interfaces for exposing subscriber data to authorized network functions and external applications. This allows for greater flexibility and innovation in providing personalized services.
-- service-based architecture (SBA) compliance: unified data management UDM is designed to fit into the 5G service-based architecture, which promotes modularity and flexibility. It interacts with other network functions through standardized APIs (application programming interfaces), allowing for easier integration and interoperability.

According to the present invention, the unified vector repository entity or functionality 150 is introduced; the unified data management UDM can serve as a frontend for different 5G core network services. Especially, it can consist of backend systems by consideration of the network data layer architecture.
Figure 4 shows the unified data management UDM being connected - via a Nudm interface - with a unified data repository UDR (especially connected via an Nudr interface), with an unstructured data storage function UDSF (especially connected via an Nudsf interface), and with the unified vector repository entity or functionality 150 according to the present invention (connected via the Nuvr interface).
The unified data repository UDR - as a structured data storage - especially comprises structured data, especially from the following entities, modules or data sources: subscriber profile data, policy data, exposure data, and application data.
Furthermore, the unstructured data storage function UDSF especially comprises session data and state data.
Furthermore, the unified data management UDM is especially connected (again via the Nudm interface) to a certain number of network functions or services, especially to
-- a policy and charging function PCF (via an Npcf interface),
-- a network repository function NRF (via an Nnrf interface),
-- a network exposure function NEF (via an Nnef interface),
-- an access and mobility management function AMF (via an Namf interface),
-- a home location register HLR, and
-- a network slice selection function NSSF.

Hence, according to the present invention, the network data layer architecture is extended by the new unified vector repository entity or functionality 150, which represents a vector store database system where records are stored on a per subscriber level. The unified vector repository entity or functionality 150 especially offers services via the Nuvr interface, especially customer embeddings, via Nuvr, towards internal or external large language model-based systems (according to the present invention, especially the telco chain handler entity or functionality 135) for different purposes. This provides the possibility to handle and generate appropriate protocol messages on a per subscriber base.

In Figure 5, an example of how data are able to be provided to the unified vector repository entity or functionalityv150 (or how data are gathered by the unified vector repository entity or functionality 150) is schematically shown:
In order to provide the unified vector repository entity or functionality 150 with subscriber vector embeddings, subscriber related data have to be collected from various sources and for different purposes (especially from the user equipment or subscriber domain 20 (UE data), the radio access network domain 110 (radio access network data), the core network domain 120 (core network data) and the application domain 121 (application data) which represent services like communication services or sensing services or subscriber behaviour). Especially, the data are pre-processed in a pre-processing stage 131 for an appropriate telco embedding model 130. The model 130 delivers the vectors to be stored in the unified vector repository entity or functionality 150. The telco embedding model 130 especially needs to be compliant to the system (telco chain handler entity or functionality 135) which utilises the unified vector repository entity or functionality 150. It especially reduces the dimensionality of the pre-processed data, provides relevant features/semantics for the subscriber of the vectors. The telco embedding model 130 furthermore especially has to be well designed for utilisation of the unified vector repository entity or functionality 150; e.g. it might vectorize significant subscriber behaviour measurements like data consumption, the number of calls per day, the number of sessions per day, the observed service experience etc. Additionally, it is advantageously possible that it finds similarities and focus points of customer behaviour.

## Claims

1. Method for large language model usage, especially for realizing network service level improvement and/or for enhancing network efficiency within or related to a mobile communication network (100), wherein the mobile communication network (100) comprises a radio access network (110) and a core network (120), wherein the mobile communication network (100) and/or the core network (120) comprises a plurality of network functions or services, wherein the plurality of network functions or services at least comprises a telco application agent (140) and a unified vector repository entity or functionality (150),
wherein, in order to realize large language model usage, especially associated with network service level improvement and/or an increase of network efficiency within or related to the mobile communication network (100), the telco application agent (140) exchanges messages with the unified vector repository entity or functionality (150), wherein the method comprises the following steps:
-- in a first step, the unified vector repository entity or functionality (150) receives a unified vector repository request message,
-- in a second step, the unified vector repository entity or functionality (150) transmits a unified vector repository response message.

2. Method according to claim 1, wherein the mobile communication network (100) is connected to or able to access or comprises, especially as part of the plurality of network functions or services, a telco chain handler entity or functionality (135), wherein the telco chain handler entity or functionality (135) comprises, or is connected to or able to access, at least one large language model entity or functionality (145, 145').

3. Method according to one of the preceding claims, wherein, especially as part of the telco chain handler entity or functionality (135), the at least one large language model entity or functionality (145, 145') receives query information, wherein the query information comprises embedding information, especially from the unified vector repository response message,
wherein especially the embedding information comprises subscriber-specific data or information, especially subscriber-specific behavioural data or information.

4. Method according to one of the preceding claims, wherein the mobile communication network (100) comprises, as part of the plurality of network functions or services, a network exposure function (129), wherein
-- the unified vector repository entity or functionality (150) receives the unified vector repository request message from the network exposure function (129) as a result of the telco application agent (140) transmitting, to the network exposure function (129), a telco application request message corresponding to the unified vector repository request message and/or
-- the unified vector repository entity or functionality (150) transmits the unified vector repository response message to the network exposure function (129), resulting in the telco application agent (140) receiving, from the network exposure function (129), a telco application response corresponding to the unified vector repository response message.

5. Method according to one of the preceding claims, wherein the mobile communication network (100) comprises, as part of the plurality of network functions or services, a telco chain handler entity or functionality (135), wherein
-- the unified vector repository entity or functionality (150) receives the unified vector repository request message from the telco chain handler entity or functionality (135) as a result of the telco application agent (140) and/or the network exposure function (129) transmitting, to the telco chain handler entity entity or functionality (135), the telco application request message corresponding to the unified vector repository request message and/or
-- the unified vector repository entity or functionality (150) transmits the unified vector repository response message to the telco chain handler entity or functionality (135), resulting in the telco application agent (140) receiving, from the telco chain handler entity or functionality (135) and/or from network exposure function (129), the telco application response corresponding to the unified vector repository response message.

6. Method according to one of the preceding claims, wherein the unified vector repository entity or functionality (150) receives embedding information, especially from an operations and maintenance entity or functionality (160), wherein especially the operations and maintenance entity or functionality (160) uses at least one out of the following:
-- user equipment data,
-- radio access network data,
-- core network data and/or
-- application data
in order to provide the embedding information to the unified vector repository entity or functionality (150) and especially as part of the unified vector repository response message.

7. Method according to one of the preceding claims, wherein the telco application request message and/or the unified vector repository request message comprises, or corresponds to, at least one request template,
wherein the request template especially corresponds to one or a plurality of standardized request templates, and/or
wherein the telco application response message and/or the unified vector repository response message comprises, or corresponds to, at least one response template,
wherein the response template especially corresponds to one or a plurality of standardized response templates.

8. System or mobile communication network (100) for large language model usage, especially for realizing network service level improvement and/or for enhancing network efficiency within or related to a mobile communication network (100), wherein the mobile communication network (100) comprises a radio access network (110) and a core network (120), wherein the mobile communication network (100) and/or the core network (120) comprises a plurality of network functions or services, wherein the plurality of network functions or services at least comprises a telco application agent (140) and a unified vector repository entity or functionality (150),
wherein in order to realize large language model usage, especially associated with network service level improvement and/or an increase of network efficiency within or related to the mobile communication network (100), the telco application agent (140) exchanges messages with the unified vector repository entity or functionality (150), wherein the system or mobile communication network (100) is configured such that:
-- the unified vector repository entity or functionality (150) receives a unified vector repository request message,
-- the unified vector repository entity or functionality (150) transmits a unified vector repository response message.

9. Unified vector repository entity or functionality (150) for large language model usage, especially for realizing network service level improvement and/or for enhancing network efficiency within or related to a mobile communication network (100), as part of a system or mobile communication network (100) according to claim 8,
wherein especially the mobile communication network (100) comprises a radio access network (110) and a core network (120), wherein the mobile communication network (100) and/or the core network (120) comprises a plurality of network functions or services, wherein the plurality of network functions or services at least comprises a telco application agent (140) and a unified vector repository entity or functionality (150),
wherein in order to realize large language model usage, especially associated with network service level improvement and/or an increase of network efficiency within or related to the mobile communication network (100), the telco application agent (140) exchanges messages with the unified vector repository entity or functionality (150), wherein the unified vector repository entity or functionality (150) is configured such that:
-- the unified vector repository entity or functionality (150) receives a unified vector repository request message,
-- the unified vector repository entity or functionality (150) transmits a unified vector repository response message.

10. Program comprising a computer readable program code which, when executed on a computer and/or on a network node or network nodes of a mobile communication network (100), especially realizing a telco application agent (140) and/or realizing a unified vector repository entity or functionality (150) and/or realizing a telco chain handler entity or functionality (135), or in part on a network node or network nodes of a mobile communication network (100), especially realizing a telco application agent (140) and/or realizing a unified vector repository entity or functionality (150) and/or realizing a telco chain handler entity or functionality (135), causes the computer and/or the network node or network nodes of the mobile communication network (100) to perform a method according one of claims 1 to 7.

11. Computer-readable medium comprising instructions which when executed on a computer and/or on a network node or network nodes of a mobile communication network (100), especially realizing a telco application agent (140) and/or realizing a unified vector repository entity or functionality (150) and/or realizing a telco chain handler entity or functionality (135), or in part on a network node or network nodes of a mobile communication network (100), especially realizing a telco application agent (140) and/or realizing a unified vector repository entity or functionality (150) and/or realizing a telco chain handler entity or functionality (135), causes the computer and/or the network node or network nodes of the mobile communication network (100) to perform a method according one of claims 1 to 7.

## Amended claims

### Amended claims in accordance with Rule 137(2) EPC.

1. Method for large language model usage, wherein the mobile communication network (100) comprises a radio access network (110) and a core network (120), wherein the mobile communication network (100) and/or the core network (120) comprises a plurality of network functions or services, wherein the plurality of network functions or services at least comprises a telco application agent (140) and a unified vector repository entity or functionality (150),
wherein, in order to realize large language model usage, the telco application agent (140) exchanges messages with the unified vector repository entity or functionality (150), wherein the method comprises the following steps:
-- in a first step, the unified vector repository entity or functionality (150) receives a unified vector repository request message,
-- in a second step, the unified vector repository entity or functionality (150) transmits a unified vector repository response message, and
wherein the mobile communication network (100) comprises, as part of the plurality of network functions or services, a network exposure function (129), wherein
-- the unified vector repository entity or functionality (150) receives the unified vector repository request message from the network exposure function (129) as a result of the telco application agent (140) transmitting, to the network exposure function (129), a telco application request message corresponding to the unified vector repository request message and/or
-- the unified vector repository entity or functionality (150) transmits the unified vector repository response message to the network exposure function (129), resulting in the telco application agent (140) receiving, from the network exposure function (129), a telco application response corresponding to the unified vector repository response message and
wherein the mobile communication network (100) comprises, as part of the plurality of network functions or services, a telco chain handler entity or functionality (135), wherein
-- the unified vector repository entity or functionality (150) receives the unified vector repository request message from the telco chain handler entity or functionality (135) as a result of the telco application agent (140) and/or the network exposure function (129) transmitting, to the telco chain handler entity entity or functionality (135), the telco application request message corresponding to the unified vector repository request message and/or
**--** the unified vector repository entity or functionality (150) transmits the unified vector repository response message to the telco chain handler entity or functionality (135), resulting in the telco application agent (140) receiving, from the telco chain handler entity or functionality (135) and/or from network exposure function (129), the telco application response corresponding to the unified vector repository response message.

2. Method according to claim 1, wherein the mobile communication network (100) is connected to or able to access or comprises the telco chain handler entity or functionality (135), wherein the telco chain handler entity or functionality (135) comprises, or is connected to or able to access, at least one large language model entity or functionality (145, 145').

3. Method according to claim 2, wherein, the at least one large language model entity or functionality (145, 145') receives query information, wherein the query information comprises embedding information, especially from the unified vector repository response message,
wherein especially the embedding information comprises subscriber-specific data or information, especially subscriber-specific behavioral data or information.

4. Method according to one of the preceding claims, wherein the unified vector repository entity or functionality (150) receives embedding information, especially from an operations and maintenance entity or functionality (160),
wherein especially the operations and maintenance entity or functionality (160) uses at least one out of the following:
-- user equipment data,
-- radio access network data,
-- core network data and/or
-- application data
in order to provide the embedding information to the unified vector repository entity or functionality (150) and especially as part of the unified vector repository response message.

5. Method according to one of the preceding claims, wherein the telco application request message and/or the unified vector repository request message comprises, or corresponds to, at least one request template,
wherein the request template especially corresponds to one or a plurality of standardized request templates, and/or
wherein the telco application response message and/or the unified vector repository response message comprises, or corresponds to, at least one response template,
wherein the response template especially corresponds to one or a plurality of standardized response templates.

6. Mobile communication network (100) for large language model usage, wherein the mobile communication network (100) comprises a radio access network (110) and a core network (120), wherein the mobile communication network (100) and/or the core network (120) comprises a plurality of network functions or services, wherein the plurality of network functions or services at least comprises a telco application agent (140) and a unified vector repository entity or functionality (150),
wherein in order to realize large language model usage, the telco application agent (140) exchanges messages with the unified vector repository entity or functionality (150), wherein the system or mobile
communication network (100) is configured such that:
-- the unified vector repository entity or functionality (150) receives a unified vector repository request message,
-- the unified vector repository entity or functionality (150) transmits a unified vector repository response message, and
wherein the mobile communication network (100) comprises, as part of the plurality of network functions or services, a network exposure function (129), wherein
-- the unified vector repository entity or functionality (150) receives the unified vector repository request message from the network exposure function (129) as a result of the telco application agent (140) transmitting, to the network exposure function (129), a telco application request message corresponding to the unified vector repository request message and/or
-- the unified vector repository entity or functionality (150) transmits the unified vector repository response message to the network exposure function (129), resulting in the telco application agent (140) receiving, from the network exposure function (129), a telco application response corresponding to the unified vector repository response message and
wherein the mobile communication network (100) comprises, as part of the plurality of network functions or services, a telco chain handler entity or functionality (135), wherein
-- the unified vector repository entity or functionality (150) receives the unified vector repository request message from the telco chain handler entity or functionality (135) as a result of the telco application agent (140) and/or the network exposure function (129) transmitting, to the telco chain handler entity entity or functionality (135), the telco application request message corresponding to the unified vector repository request message and/or
**--** the unified vector repository entity or functionality (150) transmits the unified vector repository response message to the telco chain handler entity or functionality (135), resulting in the telco application agent (140) receiving, from the telco chain handler entity or functionality (135) and/or from network exposure function (129), the telco application response corresponding to the unified vector repository response message.

7. Unified vector repository entity or functionality (150) for large language model usage as part of a system or mobile communication network (100) according to claim 8,
wherein especially the mobile communication network (100) comprises a radio access network (110) and a core network (120), wherein the mobile communication network (100) and/or the core network (120) comprises a plurality of network functions or services, wherein the plurality of network functions or services at least comprises a telco application agent (140) and a unified vector repository entity or functionality (150),
wherein in order to realize large language model usage, the telco application agent (140) exchanges messages with the unified vector repository entity or functionality (150), wherein the unified vector repository entity or functionality (150) is configured such that:
-- the unified vector repository entity or functionality (150) receives a unified vector repository request message,
-- the unified vector repository entity or functionality (150) transmits a unified vector repository response message, and
wherein the mobile communication network (100) comprises, as part of the plurality of network functions or services, a network exposure function (129), wherein
-- the unified vector repository entity or functionality (150) receives the unified vector repository request message from the network exposure function (129) as a result of the telco application agent (140) transmitting, to the network exposure function (129), a telco application request message corresponding to the unified vector repository request message and/or
-- the unified vector repository entity or functionality (150) transmits the unified vector repository response message to the network exposure function (129), resulting in the telco application agent (140) receiving, from the network exposure function (129), a telco application response corresponding to the unified vector repository response message and
wherein the mobile communication network (100) comprises, as part of the plurality of network functions or services, a telco chain handler entity or functionality (135), wherein
-- the unified vector repository entity or functionality (150) receives the unified vector repository request message from the telco chain handler entity or functionality (135) as a result of the telco application agent (140) and/or the network exposure function (129) transmitting, to the telco chain handler entity entity or functionality (135), the telco application request message corresponding to the unified vector repository request message and/or
**--** the unified vector repository entity or functionality (150) transmits the unified vector repository response message to the telco chain handler entity or functionality (135), resulting in the telco application agent (140) receiving, from the telco chain handler entity or functionality (135) and/or from network exposure function (129), the telco application response corresponding to the unified vector repository response message.

8. Program comprising a computer readable program code which, when executed on a computer and/or on a network node or network nodes of a mobile communication network (100) or in part on a network node or network nodes of a mobile communication network (100) causes the computer and/or the network node or network nodes of the mobile communication network (100) to perform a method according one of claims 1 to 5.

9. Computer-readable medium comprising instructions which when executed on a computer and/or on a network node or network nodes of a mobile communication network (100) or in part on a network node or network nodes of a mobile communication network (100) causes the computer and/or the network node or network nodes of the mobile communication network (100) to perform a method according one of claims 1 to 5.
